# EUROPEAN PATENT APPLICATION

(11) **EP 2 511 519 A1**
(43) Date of publication of application: **17.10.2012**
(21) Application number: 10835316.0
(22) Date of filing: 22.11.2010
(51) Int. Cl.: F03B 13/12, F03B 13/18

(54) **WAVE ENERGY PLANT**

(30) Priority: 09.12.2009 AZ 9026309
(71) Applicant: Silvestrov, Boris Vladimirovich, Baku 1007 (AZ); Novruzov, Asgar Mürsal Oglu, Absheronsky r-n 0121 (AZ)
(72) Inventor: The designation of the inventor has not yet been filed
(74) Representative: Boeckh, Tobias
(86) International application number: PCT/AZ2010/000009
(87) International publication number: WO 2011/069216

(57) **Abstract**

Invention relates to devises for conversion of the energy of waves into electric energy and solves a problem of reliability improvement and operating efficiency of the wave power plant, reduction of hydraulic losses when water is pumping over pipeline as well as reduction of expenses for manufacturing, installation and operation.

Solution of the problem stated is obtained hereby that the known wave power plant comprises at least one floating-type water pump, hydraulic turbine with electric generator, pipeline connecting water pump with hydraulic turbine additionally comprises offshore unit with platform placed above sea surface when hydraulic turbine with electric generator are installed at the platform. The suggested plant can additionally comprise damper or accumulative tank placed at the platform. The suggested plant can be equipped with crane as well. In this case the floating-type water pump in suggested wave power plant can be installed directly at the platform at its low part and provide with water supply both while float goes only down and when float moves in both directions - up and down. Moreover the floating-type water pump installed below can be fixed at removable part of the platform and be lifted above the platform by means of crane during installation works or maintenance.

Implementation of the given invention can be put into effect at both specially constructed for this plant new offshore units and at the already existed offshore units.

## Description

Invention relates to the field of renewable energy, notably to devices for conversion of wave energy into electric power.

There is currently in use wave power plant comprising at least of one floating-type water pump, hydraulic turbine with electric generator and pipeline connecting water pump with hydraulic turbine (ref. to patent RF No: 2316670). Besides that the plant comprises of vertical bearing fixed at the bottom of open basin with swinging bar installed in its upper part with float fixed at one end of this bar and the other end is mechanically connected to water pump, hydraulic turbine with electric generator are located ashore and pipeline supplies with water from water pump to hydraulic turbine through intermediate tank located ashore as well at the hill, where water comes from to hydraulic turbine with further wasted water's diversion via pipeline back to open basin. As a rule floating-type water pumps like this are installed in open basins (ocean, sea) at the significant distance from shore to use more high wave amplitude and based on this to enlarge volume of water pumped over. In this regard the farther floating-type water pumps are from the shore and the higher is intermediate tank location the more is the length of pipeline and more energy is needed for water pumping.

There is in use also wave power plant (prototype) comprising at least one floating-type water pump, hydraulic turbine with electric generator and pipeline connecting water pump with hydraulic turbine (see information published using link http://dartmouthwaveenergy.com/). In this case floating-type water pump is placed in open basin and is kept at chosen place by anchor with chain, hydraulic turbine with electric generator are on shore and pipeline delivers water from water pump through intermediate tank also located at the hill on shore to the hydraulic turbine with further wasted water's diversion via pipeline back to open basin. The floating system itself consists of two floats: one of them is located below and is directly connected to the anchor and body of water pump and the second is located near surface of the water and connected to pumping rod. During the move of the upper float under waves impact the float itself impacts on pumping rod implementing by this water pumping into pipeline. As a rule floating-type water pumps like this are installed in open basins (ocean, sea) at the significant distance from shore to use more high wave amplitude and based on this to enlarge volume of water pumped over. In this regard the farther floating-type water pumps are from the shore and the higher is intermediate tank location the more is the length of pipeline and more energy is needed for water pumping.

Disadvantage of the both mentioned above findings which are currently in use is a big loss of energy due to hydraulic resistance in pipes when water is delivered from open basin to intermediate tank by pipeline. During operating process there is a fast fouling of the interior surface of the pipeline while pumping sea water in there that leads to narrowing of internal diameter of the pipeline and to loss of work of the plant in general because of delivered water's volume reduction and additional expenses for frequent replacement of the pipeline accordingly that increases operating costs of the above mentioned plant.

Another disadvantage is unreliability of the mounting system of floating-type water pumps causing by wave that makes horizontal fluctuations besides vertical relocations and this leads to generation of tilting loads for floating systems installed on posts or to swinging relatively to point of fixation when installation is at anchors. And when wave is big there is a force directed upwards and affected the float that may lead to pulling the anchor or post out of the bottom that leads to failing of the whole system.

One more disadvantage is low efficiency of known floating systems that decreases operating efficiency of wave power plants currently in use. These systems are intended for installation in places with relatively small depth where waves are relatively small by range and therefore working stroke of the pump is small as well. In connection with this a number of floating systems have to be installed at the big territory to increase productivity and this in its turn leads to cost increase for manufacturing, installation and service.

Besides it for maintenance of these hydroelectric power plants there is a need in constant diver's works and repair or replacement of the floating-type hydraulic pumps and/or pipeline located in open basin include the usage of special floating means (floating cranes, barges etc.) besides diver's works, that leads to additional expenses and decreases total work productivity of this engineering solution being currently in use.

The task of this invention is an increase of performance reliability and efficiency of wave power plant, reduction of hydraulic losses during the process of pumping water through pipeline and a cut of expenditures for manufacturing, installation and service.

The solution of problem stated can be obtained by the following: wave power plant currently in use and comprising at least one floating-type hydraulic pump, hydraulic turbine with electric generator and pipeline connecting water pump with hydraulic turbine includes additionally offshore unit with platform installed above sea level, and hydraulic turbine with electric generator are installed on it.

Suggested plant may contain additionally:
- either damper tank placed at the platform, which is installed between water pump and hydraulic turbine and in this case tank has inlet and outlet in its low part connected to pipeline - inlet is connected by one part of the pipeline with water pump and outlet is connected by the second part of the pipeline with hydraulic turbine and in the upper part damper tank is closed with possibility of partial filling with water delivered from floating-type pump and formation of air cushion between water surface and upper part of the tank;
- or accumulator tank placed above platform at rigid frame or posts and in this case accumulator tank is made open and has an outlet in low part connected by one part of pipeline to hydraulic turbine and part of the pipeline connected with one end to water pump with the other end is interacting with open top of accumulator tank for its filling's capability.

Besides it the suggested power plant can be equipped with hoisting crane installed at the platform.

Besides it the floating-type water pump in suggested wave power plant can be installed directly at the platform at its low side and be connected with platform via pipe going through platform and inflexibly fixed to it, floating-type element of pump is manufactured with through-hole bore covering the pipe and installed with capability of vertical move along the pipe like on guide rail, coming out at the platform's upper part of drive pipe is made with possibility of connection to the pipeline and low part of the drive pipe is made enlarged with dead end, float is provided with low ring element covering low enlarged part of drive pipe with possibility of mobile interaction with it and formation of annular chamber between float and enlarged part of the drive pipe equipped at least with one inlet valve, located at the wall of ring element for realization of sea water supply into annular chamber with enlarging of its volume in the process when float is rising up the wave and, at least one outlet valve placed at the enlarged part of drive pipe or at the drive pipe itself in immediate vicinity to its enlarged part for realization of water supply from annular chamber into drive pipe while volume of annular chamber is reducing in the process of float's going down on wave.

The platform may have as well one removable part in form of lid installed in the opening and axial pipe of water pump in this case comes through removable part of the platform and dimensions of the opening where removable part of the platform is installed exceed dimensions of the floating-type water pump.

While installing the floating-type water pump at the low side of the platform or its removable part the plant may have additionally guiding elements that cover floating element from outer side.

Besides it for maximum utilization of the wave's energy both when float is coming down the wave and going up the wave the ring element of the float in low part of this suggested plant that juts out the enlarged part of the drive pipe is supplied with butt lid with capability of formation of end chamber between lid and low covered end of the enlarged part of the drive pipe that is supplied at least with one inlet valve installed at the butt lid or at the wall of the ring element in immediate vicinity of butt lid for realization of water supply from the sea into end chamber while its volume is increasing during the process when float is going down the wave and at least with one outlet valve installed at the closed end of the drive pipe for realization of water supply from end chamber into drive pipe while the volume of the end chamber is decreasing during the process when float is going up the wave.

At the same time the floating-type water pump in this suggested plant can be supplied with limiter of vertical movement's distance of the floating element which is produced by any known method of manufacturing and the floating element itself can be supplied at least by one emergency valve for filling the float with water, in this case the emergency valve is connected with limiter of vertical movement's distance of the floating element by any known method and opens when critical load of pressure of the floating element on limiter appears.

Availability of the offshore unit with platform placed above sea surface and installation of the hydraulic turbine with generator on it allow to reduce dramatically the length of the pipeline for water delivery from water pump to turbine because it becomes possible to install turbine near the place of water pump's installation and in this case there will not be a necessity in water delivery to the shore that in main part decreases the length of the pipeline and shorten expenses for its maintenance and replacement. Besides it offshore unit can be installed in pretty deep places allowing to use energy of big waves and thereby to increase operating efficiency of suggested plant.

The installation of additional damper or accumulative tank at the platform between water pump and hydraulic turbine allows increase of operating efficiency of the plant due to leveling of the pressure and assurance in evenness of water supply to turbine.

The crane's availability at the platform allows to lift the equipment to be repaired or replaced at the platform that excludes necessity of transportation of subject equipment to the shore and does not require usage of additional crane ship and decreases service costs in general.

Placement of the floating-type water pump directly at the platform at its low side by the use of rigid connection ensures stability of the floating system during operating process and thereby raises operating efficiency of the plant. Besides this it allows to place the wave power plant in deep water areas with bigger wave amplitude that increases work efficiency of the plant. The length of the pipeline from water pump to hydraulic turbine is reducing at maximum that leads to reduction of energy losses and expenses both for pipeline itself and its maintenance and repair that decreases costs of manufacturing and operation of this suggested plant.

Manufacturing of the floating element in form of cylinder of water pump and pipe in form of guide bar of water pump rigidly connected with platform allows to decrease number of details of floating-type water pump system and reach greater productivity that increases work efficiency of the power plant in general.

Availability of the removable part at the platform in form of lid installed in opening at which floating-type water pump is placed allows of fast lifting of this removable part together with floating-type water pump at the platform and proceed with maintenance, repair or replacement without diving jobs and/or usage of additional floating equipment that decreases expenses and increases work efficiency of the suggested plant.

Existence of additional guiding elements covering floating element from outer side allows to decrease load on central drive pipe that reduces loading level on this pipe and reduces wear in area of interaction between pipe and floating element that increases reliability of device's work.

Existence of limiters of vertical movement distance of floating element and providing the float with emergency valve for filling with water allows to exclude damage of this system in case of heavy sea exceeding engineered value that increases reliability of work of suggested plant.

Drawings attached illustrate the technical decision declared:
Fig. 1 shows one of the variants regarding version of suggested power plant with floating-type water pump fixed at the bottom of open basin with water supply directly to hydraulic turbine.
Fig. 2 shows variant referring to the version of suggested power plant in Fig. 1 with damper tank additionally installed.
Fig. 3 shows variant referring to the version of suggested power plant in Fig. 1 with accumulative tank additionally installed.
Fig. 4 shows variant referring to the version of suggested power plant in Fig. 1 with crane at the platform additionally installed.
Fig. 5 shows one of variants of the suggested power plant with floating-type water pump fixed at the low part of the platform of offshore unit with water delivery directly to hydraulic turbine.
Fig. 6 -7 show variant of embodiment of the floating-type water pump fixed at the low part of the platform.
Fig. 8 -9 show another variant of embodiment of the floating-type water pump fixed at the low part of the platform.
Fig. 10 shows variant of suggested power plant in reference to Fig. 5 with damper tank additionally installed.
Fig. 11 shows variant of suggested power plant in reference to Fig. 5 with accumulative tank additionally installed.
Fig. 12 shows variant of suggested power plant with floating-type water pump fixed at removable part of the platform in operating position.
Fig. 13 shows variant of suggested power plant in reference to Fig. 12 but with removable part of the platform with floating-type water pump in raised position for execution of repair works for example.

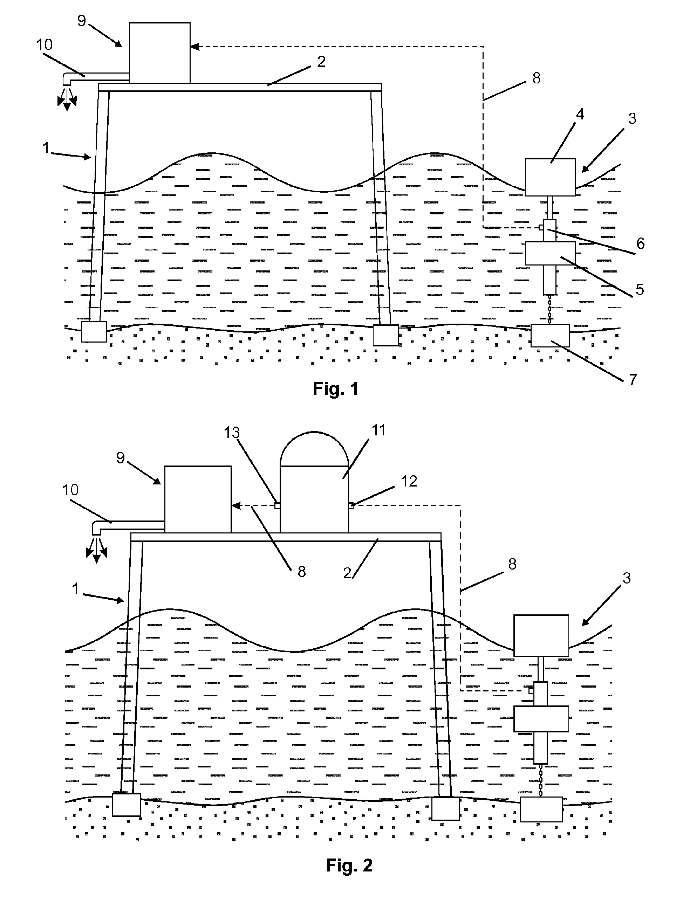

Position 1 at the figures attached indicates offshore unit rigidly installed at the bottom of the open basin. Platform 2 is installed at the offshore unit 1 above water surface. Position 3 at Fig. 1 ― 4 indicates floating-type water pump consisting of two floats 4 and 5 and water pump 6. Float 5 is under the water and directly connected to water pump 6 and is kept in underwater position by anchor 7 and chain.

The float 4 is located at the water surface and connected to water pump's rod. When float 4 moves on waves it acts on water pump's rod and by this water is pumping into pipeline 8 intended for water delivery from floating-type water pump 3 to hydraulic turbine 9 with electric generator installed at the platform 2. There is drain hole 10 for dumping of wasted water from hydraulic turbine 9 into open basin.

At Fig. 2 in system of water supply from floating-type water pump 3 to hydraulic turbine 9 there is additionally installed at platform 2 damper tank 11, which has inlet 12 and outlet 13 openings in its low part. Inlet opening 12 is connected by one part of pipeline 8 to floating-type water pump 3 and outlet opening 13 is connected by other part of pipeline 8 to hydraulic turbine 9. In its upper part damper tank 11 is made covered with possibility of partial filling with water delivered from floating-type water pump 3 and formation of air cushion between water surface and upper part of tank 11.

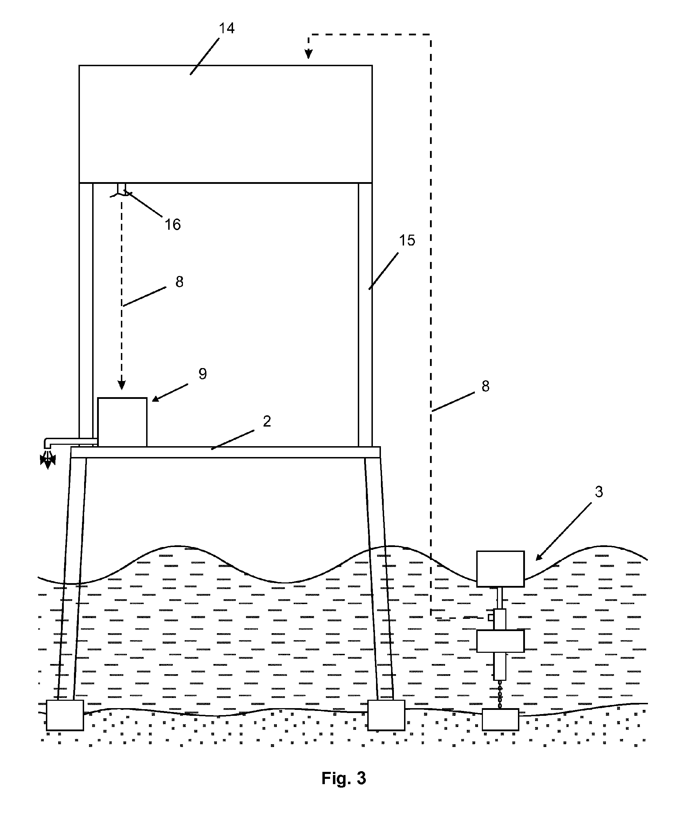

One more variant of implementation of suggested power plant is shown at Fig. 3, where in water supply system from floating-type water pump 3 to hydraulic turbine 9 is an additionally installed accumulative tank 14 placed above platform 2 at rigid frame or posts 15. Accumulative tank 14 has an outlet opening 16 in its low part, connected by part of pipeline 8 to hydraulic turbine 9. Second part of pipeline 8 is connected by one end with floating-type water pump 3 and by the second end is interacting with open top of accumulative tank 14 for ability of its filling with water.

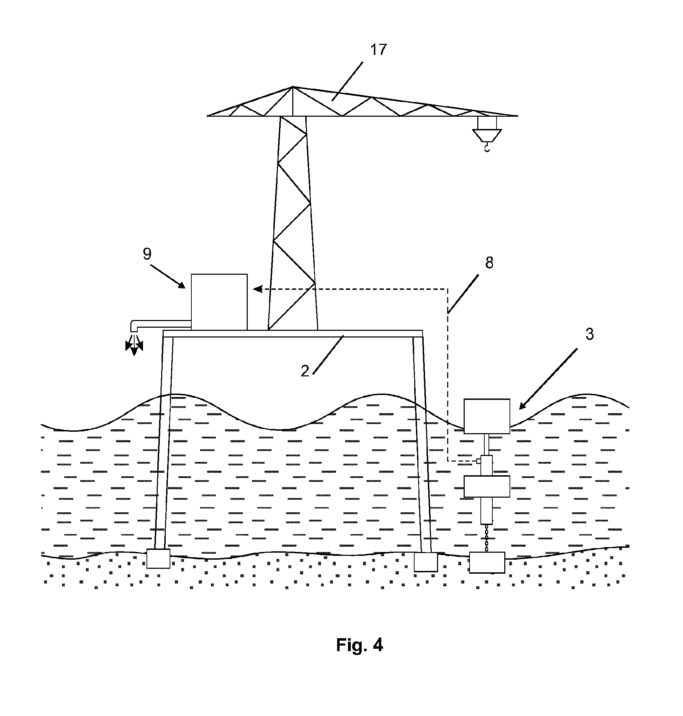

It is possible to install a crane 17 for lifting/installation of floating-type water pump 3, hydraulic turbine 9 as well as for execution of repair and preventive works at the platform 2 and Fig. 4 particularly shows a tower crane.

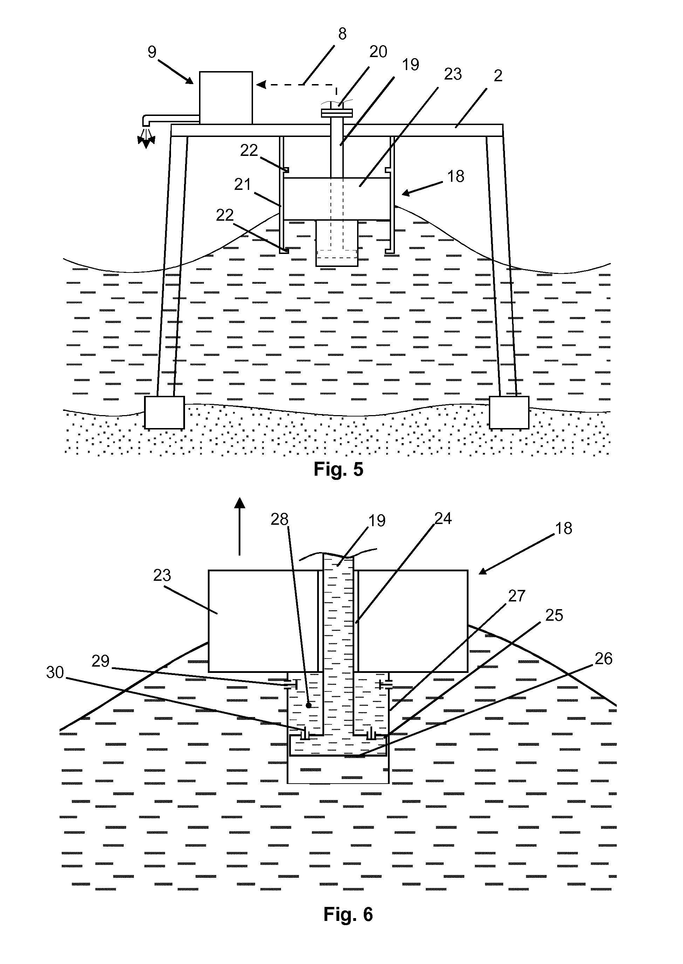

Fig. 5, 10 - 13 show wave power plant with different variant of alternative design and placement of floating-type water pump 18 installed at the low side of platform 2 and rigidly connected to it by means of pipe 19 passing through the platform 2. One end of pipeline 8 is connected with upper end of pipe 19 coming out at the platform by means of connective element 20, and the other end of pipeline 8 is connected to hydraulic turbine 9.

Guiding elements 21 with limiters of the vertical movement's distance 22 of the float 23 are installed at the low side of platform 2 (Fig. 5, 10 - 13). Guiding elements 21 cover float 23 from outer side with ability of movable interaction. Limiters 22 are manufactured by any known method and float 23 itself can be provided with any known emergency valve for filling the float with water (not shown in drawings). In this case emergency valve is connected by any known means with limiters of vertical movement's distance 22 of the float 23.

Variant of design of floating-type water pump 18 is shown in Fig. 6 ― 7. Floating-type water pump 18 consists of pipe 19, rigidly connected with platform 2 (for example as it is shown at Fig. 5), float 23 having through hole 24 by which it covers the pipe 19 with ability of vertical movement along the pipe as along the guide rail. Pipe 19 has an enlarged part 25 that blanked off by end cover 26.

In low part float 23 has a ring element 27 installed in alignment with opening 24 and in this case inner diameter of the ring element 27 covers low enlarged part 25 of the pipe 19 with ability of movable interaction with it, and an annular chamber 28 is formed between float 23 and enlarged part 25.

Inlet valves 29 are placed at the wall of the ring element 27 and at the upper butt of the enlarged part 25 are placed outlet valves 30.

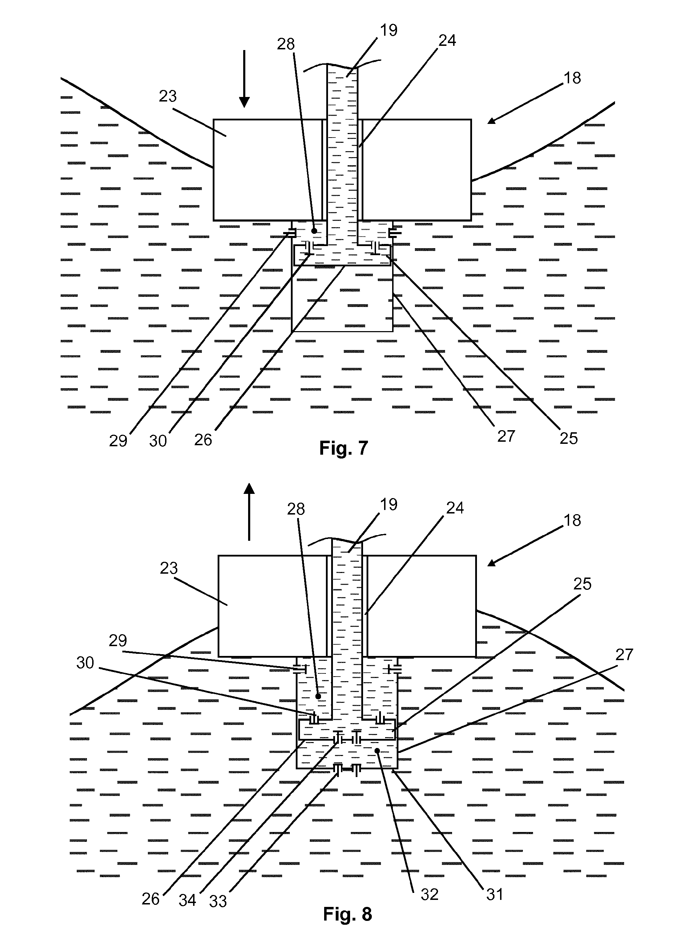

One more variant of embodiment of suggested floating-type water pump is shown at the Fig. 8 ― 9 where floating-type water pump 18 similarly to one shown at Fig. 6 - 7 in low part jutting out the enlarged part 25 is provided with end cover 31 with ability of end chamber formation between it and low end 26 of end chamber 32. The end chamber is supplied with inlet valves 33 placed at the end cover 31 of the ring element 27 and outlet valves 34 placed at closed end 26 of enlarged part 25.

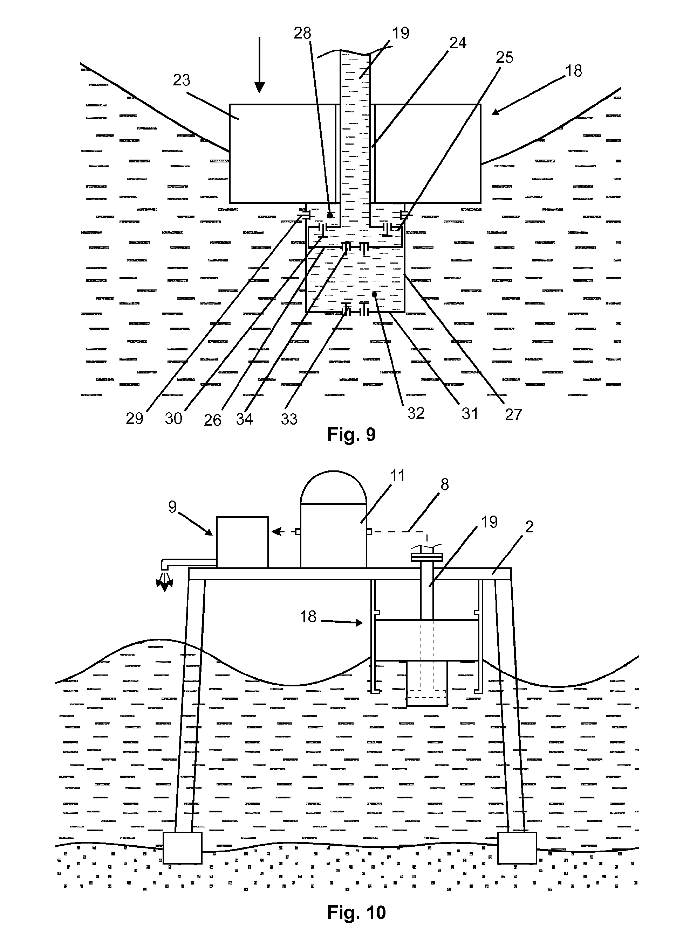

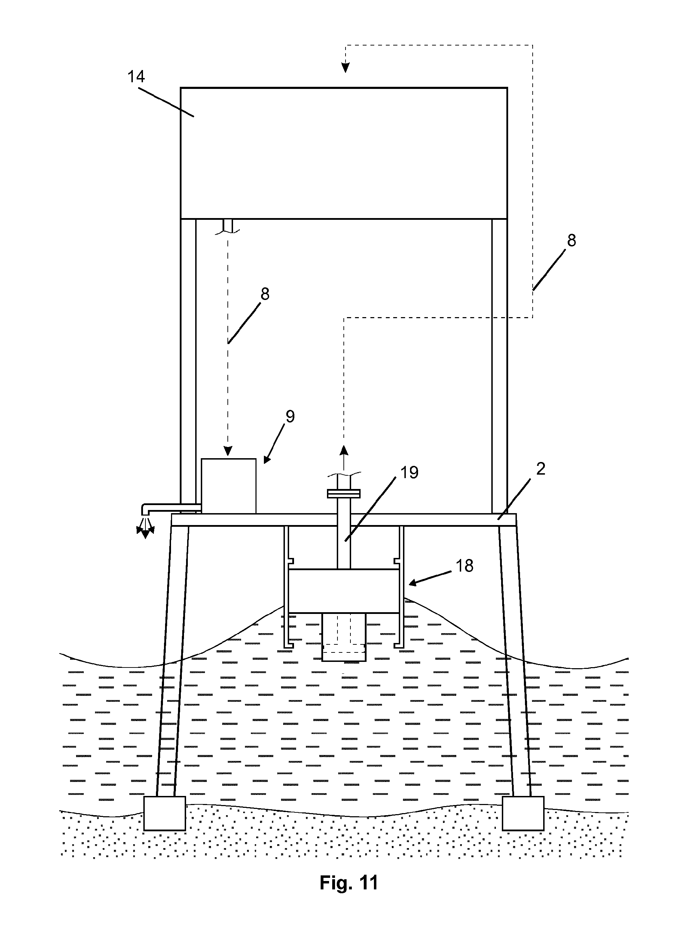

At Fig. 10 - 11 is shown a variant of wave power plant in reference to Fig. 5 where a damper tank 11 (Fig. 10) or accumulative tank 14 (Fig. 11) is additionally installed at the platform 2 in the system of water supply from floating-type water pump 18 to hydraulic turbine 9.

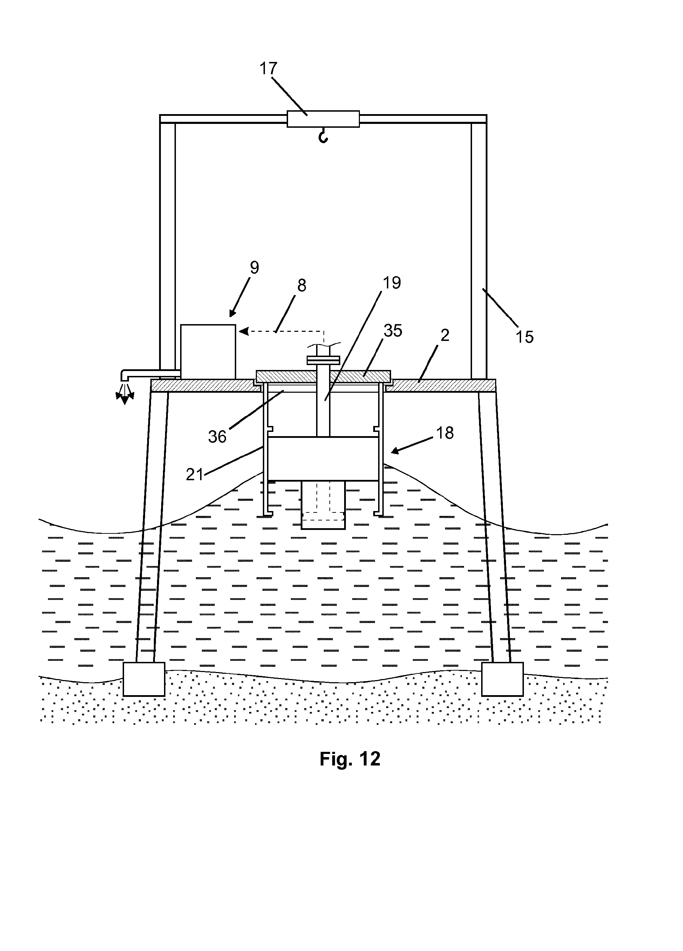

Variant of installation of the floating-type water pump 18 at the low side of the removable part 35 of platform 2 is shown at Fig. 12. In this variant of implementation the floating-type water pump 18 is installed at the removable part 35 of the platform, in this case removable part 35 in form of cover is installed in the opening 36 and its overall dimensions exceed the overall dimensions of floating-type water pump 18 with covering it external guiding elements 21.

A crane 17 is installed at rigid frame or at posts 15 at the platform 2 for realization of hoisting works, for example for repair of floating-type water pump 18, hydraulic turbine 9 and other equipment and Fig. 12 ― 13 specifically shows tower crane.

Below is a description of work of suggested power plant.

The suggested power plant specifically shown at Fig. 1 works in the following way.

When float 4 moves on waves it impacts the rod of water pump 6 and by this the water pumping into pipeline 8 is implemented. Water is delivered from floating-type water pump 3 to hydraulic turbine 9 by this pipeline. When rotating under water impact the hydraulic turbine 9 transfers force to electric generator from which the electric power is delivered to consumer by means of known technical devices. Wasted water from hydraulic turbine 9 is dumping into open basin through drain hole 10.

The placement of hydraulic turbine with generator at the platform in immediate vicinity of floating-type water pump allows to reduce significantly the length of the pipeline for water delivery from water pump to hydraulic turbine. Using this variant of implementation there is no need to deliver water to the shore and occupy significant areas under accumulative tank and outlet canals that significantly decreases the length of pipeline and reduces expenses on its maintenance and replacement. Besides it this offshore unit can be installed in places with relatively big depth that allows to use energy of big waves and by this to increase operating efficiency of suggested plant.

Installation of additional damper tank 11 (Fig. 2) between water pump and hydraulic turbine at the platform allows to increase operating efficiency of the plant at the expense of leveling of pressure of the water delivered to the turbine.

In variant of implementation of the suggested plant with accumulative tank 14 (Fig. 3) this tank is installed is placed at the considerably big height above the platform 2 similarly to installation of the accumulative tank on shore in known variants of implementation to achieve pressure differential. In this connection an even water supply to the hydraulic turbine 9 is achieved without any pulsations.

A tower crane 17 (Fig. 4) installed at the platform 2 is assigned for lifting equipment to be repaired or replaced at the platform. This excludes the necessity of transportation of the equipment to be repaired on shore, does not require a permanent use of additional crane ship and reduces expenses for maintenance and repair in general.

Floating-type water pump 18 in suggested power plant at Fig. 5 is installed at the low side of the platform 2. The floating-type water pump works in the following way (Fig. 6 - 7).

When float 23 is rising up the wave (Fig. 6) an evacuation in the ring chamber 28 takes place that leads to water pumping from open basin to ring chamber 28 through inlet valves 29. During this process outlet valves 30 located at the upper end of the enlarged part 25 are closed.

When float 23 is going down the wave (Fig. 7) pressure in ring chamber is increasing that leads to closing of inlet valves 29 and opening of outlet valves 30. In the result of it water from ring chamber 28 under the pressure gets into pipe 19 and then is delivered to hydraulic turbine 9.

To reduce pressure losses in ring chamber 28 and to reduce deterioration of the inside opening 24 of the float 23 interacting with drive pipe 19 as well, and between enlarged part 25 of the pipe 19 and inner surface of the ring element 27 this device is equipped with compactors and /or gaskets (not shown in drawings) acceptable for this kind of equipment and able to stand the pressure occurred in ring chamber 28.

Additionally installed guiding elements 21 (Fig. 5) covering the float 23 from outer side decrease the load on drive pipe 19 and increase reliability of work of floating-type water pump 18 and power plant itself accordingly. In this case rollers can be installed between guiding elements and outer surface to reduce deterioration of both the float 23 and guiding elements 21.

The floating-type water pump shown at the Fig. 8 and Fig.9 works in the following way.

When float 23 is rising the wave (Fig. 8) an evacuation takes place inside the ring chamber 28 that leads to pumping the water from open basin into ring chamber through inlet valves 29. During this process outlet valves 30 at the upper end of enlarged part 25 are closed. At the same time when float is rising up the pressure in end chamber 32 is increasing and outlet valves 34 installed at closed butt 26 are opening and inlet valves 33 installed at the end cover 31 are closing. Water comes under the pressure from end chamber 32 through opened inlet valves 34 into drive axial pipe 19 and then to hydraulic turbine 9.

When float 23 (Fig. 9) is going down the wave the pressure inside the ring chamber 28 is increasing, that leads to closure of inlet valves 29 and opening of inlet valves 30. Water from ring chamber 28 gets under the pressure into pipe 19 and then is delivered to hydraulic turbine 9. At the same time when float 23 is going down the wave an evacuation in end chamber 32 takes place, that leads to water pumping from open basin into end chamber through inlet valves 33. During this process outlet valves 34 of end chamber 32 are closed.

This embodiment of floating-type water pump allows to guarantee water entry from open basin to hydraulic turbine 9 during both rising the float 23 the wave, when water is delivered into pipeline from end chamber 32 and while going the float down the wave, when water is delivered into pipeline from ring chamber 28 wherewith the maximum utilization of the wave's energy is obtained.

Manufacturing of the float 23 in form of cylinder of water pump and rigidly connected to the platform 2 pipe 19 in form of rod of water pump allow to reduce number of details of floating-type water pump system and obtain greater productivity, that increases the operating efficiency of the power plant in general.

As it was noticed above there are both vertical and horizontal loads effecting upon floating-type water pumps during the process of work. Therefore rigid connection of the floating-type water pump to the platform and presence of guiding elements 21 compensate the load appeared, that significantly increases the reliable performance of the floating-type water pump and the whole system in general.

It is also possible to place an additional damper 11 (Fig. 10) or accumulative 14 (Fig. 11) tanks in the system of water supply from floating-type water pump 18 to hydraulic turbine 9 for leveling water pressure by installation of the pump18 at the low side of platform 2.

An installation of the floating-type water pump 18 at the low side of the movable part 35 of platform 2 (Fig. 12) is also possible.

This design of removable part 35 in form of installed in the opening 36 cover at which floating-type water pump 18 is installed allows to realize a fast lifting of this removable part together with floating-type water pump at the platform for execution of assembling or preventive works. This ensures an ease and simplicity in maintenance or replacement of details and blocks of water pump without diver's works and use of additional ships that decreases expenses and increases operating efficiency of the suggested plant.

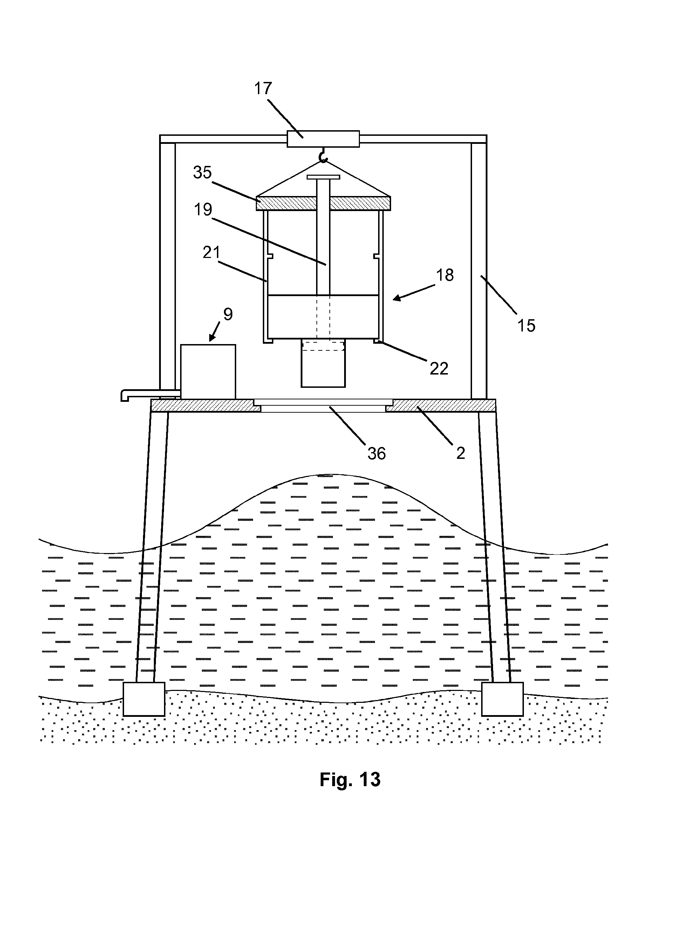

Fig. 13 shows lifting of water pump 18 assembled with removable part 35 above the platform with the help of overhead type crane 17, for example. For this purpose it is necessary only to disconnect water pipeline from pipe 19 of floating-type water pump 18 and release removable part 35 from fixation to the platform 2.

The most preferable variant from all listed above is a variant with water pump fixed from below to the offshore unit platform because due to high strength and rigidity of offshore platform's construction these water pumps can be manufactured of much bigger sizes than installed at the sea bottom with the help of anchors, ropes and chains. One water pump installed directly at the platform can substitute several smaller pumps fixed at the bottom and in some cases, for example when offshore unit is installed in deep water, the installation of floating-type water pumps at anchors can not be possible at all.

Specially intended for these purposes offshore units could be constructed for realization of the given invention but it is possible to use offshore units already existed, for example those that were used before for borings but currently not involved into boring. This will significantly decrease expenses for implementation of this invention suggested.

As the statement above indicates this invention solves the problem formulated, has a feature of novelty and industrial applicability.

The suggested technical decision is determined by elements of claims and is not limited by variants of specific implementation. For example this invention can be used for power supply of production facilities and furnishings of the functioning offshore units themselves that are under operation by oilmen in case if these offshore units are equipped with hydraulic turbines and fixed from below floating-type water pumps. It is possible to apply other variants of usage of the given invention within the scope of limitations, indicated in claims.

## Claims

1. Wave power plant comprising at least one floating-type water pump, hydraulic turbine with electric generator, pipeline connecting water pump with hydraulic turbine, ***characterised in that*** it additionally comprises offshore unit with platform installed above sea surface when hydraulic turbine with generator are installed at the platform.

2. Wave power plant according to claim 1, ***characterised in that*** it additionally comprises damper tank installed at the platform, placed between water pump and hydraulic turbine when in its low part the tank has inlet and outlet openings connected with parts of pipeline - inlet opening is connected by one part of the pipeline to water pump and outlet opening is connected by the second part of pipeline to hydraulic turbine and damper tank is manufactured with covered upper part with ability of partial filling with water provided from water pump and formation of air cushion between water surface and upper part of the tank.

3. Wave power plant according to claim 1, ***characterised in that*** it additionally comprises accumulative tank installed at the platform at the rigid frame or at posts when accumulative tank is manufactured open and has in its low part outlet openings connected by part of pipeline to hydraulic turbine and part of the pipeline connected by one end to water pump interacts by the other end with open upper part of the accumulative tank with ability to fill it with water.

4. Wave power plant in any of claims 1-3, ***characterised in that*** it equipped with crane installed at the platform.

5. Wave power plant in any of claims 1-4, ***characterised in that*** floating-type water pump is installed at the platform at its low part and is connected with platform by means of the pipe going through the platform and rigidly fixed on it, the floating element of the pump is manufactured with open-end hole covering the pipe and is installed with ability of vertical movement along the pipe as along the guide rail, the upper part of guiding pipe that comes out at the platform is manufactured with ability to be connected to the pipeline and low part of guiding pipe is manufactured enlarged with dead end, the float is provided with low ring element covering the low enlarged part of guiding pipe with ability of sliding interaction with it and formation of ring chamber between the float and enlarged part of guiding pipe, supplied at least by one inlet valve installed at the wall of ring element for providing with water supply from the sea into the ring chamber during the process of its volume increase when the float is rising up the wave and, at least by one outlet valve installed at the enlarged part of guiding pipe or at the guiding pipe itself in immediate vicinity to its enlarged part for providing with water supply from ring chamber into guiding pipe when volume of ring chamber decreases during the process of float's move down the wave.

6. Wave power plant according to claim 5, ***characterised in that*** the platform has at least one removable part in form of lid installed in the opening and axial pipe of the water pump comes through removable part of the platform herewith the sizes of the opening where removable part of the platform is installed exceed sizes of floating-type water pump.

7. Wave power plant according to claim 5 or 6, ***characterised in that*** it comprises additionally guiding elements that cover floating element from outside.

8. Wave power plant in any of claims 5-7, ***characterised in that*** ring element in low part jutting out the limits of enlarged part of guiding pipe is supplied with end cover with ability of formation of end chamber between it and low dead end of the enlarged part of guiding pipe and the chamber is provided at least with one inlet valve installed at the end cover or at the wall of ring element in the immediate vicinity to end cover for providing with water supply from the sea into end chamber when its volume increases in the process of float's going down the wave, and at lease by one outlet valve installed at the dead end of guiding pipe for water delivery from end chamber into guiding pipe when the volume of end chamber decreases during the process of float's rising up the wave.

9. Wave power plant in any of claims 5-8, ***characterised in that*** floating-type water pump is provided with limiter of the vertical movement extent manufactured in any known way.

10. Wave power plant according to claim 9, ***characterised in that*** floating element is provided with at least one emergency valve for filling the float with water herewith the emergency valve is connected by any known manner to the limiter of the vertical movement extent of the floating element and opens when pressure load limit of floating element at the limiter arises.
